# EUROPÄISCHE PATENTSCHRIFT

(11) **EP 3 744 595 B1**
(45) Veröffentlichungstag und Bekanntmachung des Hinweises auf die Patenterteilung: **09.02.2022**
(21) Anmeldenummer: 20176410.7
(22) Anmeldetag: 30.09.2014
(51) Int. Cl.: B60W 30/12, B60W 30/16, G01C 21/34, B60K 35/00, B60K 37/06, B60K 37/02, B60W 50/14

(54) **VERFAHREN FÜR EIN FAHRERASSISTENZSYSTEM EINES FAHRZEUGS UND FAHRERASSISTENZSYSTEM EINES FAHRZEUGS**
METHOD FOR A DRIVER ASSISTANCE SYSTEM OF A VEHICLE AND DRIVER ASSISTANCE SYSTEM OF A VEHICLE
PROCÉDÉ POUR UN SYSTÈME D'AIDE À LA CONDUITE D'UN VÉHICULE ET SYSTÈME D'AIDE À LA CONDUITE D'UN VÉHICULE

(30) Priorität: 01.10.2013 DE 102013110864
(43) Veröffentlichungstag der Anmeldung: 02.12.2020
(62) Teilanmeldung aus: 14780457.9
(73) Patentinhaber: VOLKSWAGEN AG, 38440 Wolfsburg (DE)
(72) Erfinder: BENDEWALD, Lennart, 38442 Wolfsburg (DE); HACKENBERG, Linn, 38448 Wolfsburg (DE)
(74) Vertreter: Neusser, Sebastian

(56) Entgegenhaltungen:
- DE-A1-102005 044 607
- DE-A1-102009 060 391
- DE-A1-102012 201 513
- DE-B3-102006 025 383

## Beschreibung

Die vorliegende Erfindung betrifft ein Verfahren für ein Fahrerassistenzsystem eines Fahrzeugs, insbesondere für ein Fahrerassistenzsystem, welches in der Lage ist, das Fahrzeug zumindest teilweise mit einer so genannten Autopilotfunktion zu steuern. Die vorliegende Erfindung betrifft insbesondere eine Informationsausgabe, welche die Autopilotfunktion betrifft. Die vorliegende Erfindung betrifft weiterhin ein Fahrerassistenzsystem, welches zur Durchführung dieses Verfahrens ausgestaltet ist.

Moderne Fahrzeuge, insbesondere Fahrzeuge für den Straßenverkehr, wie z.B. Personenkraftwagen oder Lastkraftwagen, werden in zunehmendem Maße mit Fahrerassistenzsystemen ausgestattet, welche ein teilweises oder sogar vollautomatisches Fahren des Fahrzeugs ermöglichen. Diese Systeme können unter bestimmten Bedingungen sowohl die Querführung als auch die Längsführung des Fahrzeugs eigenständig übernehmen. Ein Fahrer des Fahrzeugs muss dabei diese automatische Führung des Fahrzeugs nicht dauerhaft überwachen, sondern kann zu einem geeigneten Zeitpunkt die Führung des Fahrzeugs an eine so genannte Autopilotfunktion abgeben oder zurückholen. Wenn die Führung des Fahrzeugs von der Autopilotfunktion übernommen wird, kann sich der Fahrer zumindest teilweise anderen Tätigkeiten widmen.

Die DE 197 43 024 A1 bezieht sich in diesem Zusammenhang auf ein Kraftfahrzeug mit Mitteln zur zeitweisen autonomen Fahrzeugführung und Mitteln zur Kommunikation eines Fahrzeugnutzers mit wenigstens einem elektronischen Kommunikationssystem. Eine Bedieneinrichtung ist vorgesehen, durch welche die Kommunikationsmittel zwecks Durchführung eines Kommunikationsvorgangs und die Fahrzeugführungsmittel zwecks autonomer Fahrzeugführung aktivierbar sind. Die aktivierten Fahrzeugführungsmittel übermitteln bei Erkennen einer erforderlich werdenden manuellen Fahrzeugführung eine Übernahmeinformation an die Kommunikationsmittel, die diese Übernahmeinformation an einer Anzeigeeinrichtung anzeigen.

Die DE 10 2007 039 375 B4 betrifft ein Kraftfahrzeug mit einem Fahrerassistenzsystem mit einer Stop&Go-Funktion. Das Fahrerassistenzsystem stellt eine Längsführung des Fahrzeugs bereit und umfasst eine Erfassungsvorrichtung zum Erfassen von Informationen, welche ein vorausfahrendes Fahrzeug betreffen. In Abhängigkeit von der mittels der Erfassungsvorrichtung erfassten Informationen kann das Fahrerassistenzsystem das Fahrzeug automatisch in den Stand abbremsen und bei Erfassen einer erneuten Anfahrt des vorausfahrenden Fahrzeugs in Abhängigkeit von einem Betätigungssignal, welches über eine Eingabeeinrichtung von einem Fahrer gebbar ist, automatisch wieder anfahren.

Die DE102009060391A1 offenbart ein Verfahren zur Kennzeichnung der Kontrollverantwortung für automatisierte Fahrvorgänge eines Fahrerassistenzsystems, wobei die Kontrollverantwortung zwischen Fahrer und Fahrerassistenzsystem als Funktion der Fahrsituation verteilt werden kann und wobei die Kontrollverantwortung für den automatisierten Fahrvorgang und/oder deren mögliche Änderung dem Fahrer durch unterschiedliche farbliche Kennzeichnungen angezeigt werden und wobei die unterschiedlichen farblichen Kennzeichnungen durch eine farbliche Kennzeichnung des Steuerinstruments des Fahrerassistenzsystems und/oder durch eine farbliche Kennzeichnung der im Sichtbereich des Fahrers liegenden Oberflächen im Innenraum des Kraftfahrzeugs erfolgen.

Eine vollautomatische Fahrzeugführung mit einer Autopilotfunktion ist derzeit für die meisten Fahrzeugbenutzer eine neue Erfahrung und ungewohnte Funktionalität. Dabei kann es insbesondere dann zu einer gefährlichen Verwirrung kommen, wenn dem Fahrer nicht klar ist, ob die Fahrverantwortung derzeit bei ihm oder bei der Autopilotfunktion liegt. Eine klare, übersichtliche und intuitive Anzeige der Autopilotfunktion ist daher wünschenswert.

Diese Aufgabe wird gemäß der vorliegenden Erfindung durch ein Verfahren für ein Fahrerassistenzsystem eines Fahrzeugs nach Anspruch 1 und ein Fahrerassistenzsystem für ein Fahrzeug nach Anspruch 11 gelöst. Die abhängigen Ansprüche definieren bevorzugte und vorteilhafte Ausführungsformen der Erfindung.

Gemäß der vorliegenden Erfindung wird ein Verfahren für ein Fahrerassistenzsystem eines Fahrzeugs bereitgestellt. Das Fahrerassistenzsystem weist eine Autopilotfunktion auf, mit welcher das Fahrerassistenzsystem in der Lage ist, das Fahrzeug zumindest teilweise automatisch zu steuern, beispielsweise entlang vorbestimmter Abschnitte einer geplanten Route zu einem Ziel.

Im Zusammenhang mit der vorliegenden Erfindung betrifft die Autopilotfunktion eine Funktion des Fahrerassistenzsystems, welche in der Lage ist, das Fahrzeug zumindest in bestimmten Situationen oder auf bestimmten Straßen, wie zum Beispiel Autobahnen oder Landstraßen, automatisch zu steuern. D.h., die Autopilotfunktion übernimmt die Längsführung und/oder die Querführung des Fahrzeugs und steuert das Fahrzeug ohne Eingreifen oder Zutun des Fahrers. Die Steuerung des Fahrzeugs mit Hilfe der Autopilotfunktion wird auch als hochautomatisiertes Fahren oder autonomes Fahren bezeichnet.

Bei dem Verfahren wird ein Aktivierungszustand der Autopilotfunktion bestimmt. Der Aktivierungszustand der Autopilotfunktion zeigt an, ob das Fahrzeug derzeit mittels der Autopilotfunktion automatisch gesteuert wird oder nicht. Bei dem Verfahren wird weiterhin in Abhängigkeit von dem Aktivierungszustand der Autopilotfunktion eine Anzeigevorrichtung des Fahrerassistenzsystems aktiviert. Durch das Aktivieren der Anzeigevorrichtung in Abhängigkeit von dem Aktivierungszustand der Autopilotfunktion kann der Aktivierungszustand der Autopilotfunktion eindeutig, intuitiv und klar vermittelt werden. Insbesondere kann die Anzeigevorrichtung eine von der Autopilotfunktion exklusiv genutzte oder eine separate, in einem eigenen Gehäuse angeordnete Anzeigevorrichtung umfassen, sodass einem Fahrer oder Insassen des Fahrzeugs anhand des Aktivierungszustands der Anzeigevorrichtung sofort klar ist, ob das Fahrzeug von der Autopilotfunktion gesteuert wird oder nicht.

Die Anzeigevorrichtung wird aktiviert, indem die Anzeigevorrichtung von einer ersten Position in eine zweite Position mechanisch verstellt wird. Diese mechanische Verstellung erfolgt automatisch in Abhängigkeit von dem Aktivierungszustand der Autopilotfunktion. In der zweiten Position ist die Anzeigevorrichtung derart in dem Fahrzeug angeordnet, dass sie von mindestens einer Sitzposition in dem Fahrzeug ablesbar ist. In der ersten Position kann die Anzeigevorrichtung beispielsweise weggeklappt sein oder in einer entsprechenden Aufnahme in einem Armaturenbrett des Fahrzeugs versenkt angeordnet sein. Somit sind Informationen der Autopilotfunktion bei aktivierter Autopilotfunktion auf der Anzeigevorrichtung gut ablesbar und bei deaktivierter Autopilotfunktion kann die Anzeigevorrichtung entsprechend aus dem Sichtfeld des Fahrers entfernt werden, um die Sicht auf andere Instrumente oder beispielsweise die Sicht durch die Frontscheibe des Fahrzeugs nicht zu behindern. Alternativ oder zusätzlich ist auf der Anzeigefläche der Anzeigevorrichtung ein Sicht behinderndes Mittel angeordnet, welches beim Aktivieren der Anzeigevorrichtung automatisch beseitigt wird. Ein derartiges Sicht behinderndes Mittel kann beispielsweise mit so genanntem "Switchable Glass" realisiert werden, welches mittels einer geeigneten Ansteuerung entweder transparent oder milchig geschaltet werden kann. Weitere Möglichkeiten zur Realisierung von Sicht behindernden Mitteln sind beispielsweise Beschichtungen der Anzeigefläche, welche in Abhängigkeit einer Ansteuerung mehr oder weniger transparent sind. Bei frei programmierbaren Anzeigevorrichtungen, beispielsweise einer Matrix-LCD-Anzeige, kann ein derartiges Sicht behinderndes Mittel auch beispielsweise softwaretechnisch simuliert werden. Solange das Sicht behindernde Mittel aktiv ist, sind Informationen auf der Anzeigevorrichtung nicht ablesbar oder zumindest im Wesentlichen nicht ablesbar. Bei beseitigtem Sicht behinderndem Mittel sind Informationen auf der Anzeigevorrichtung hingegen gut sichtbar. Dadurch kann der Zustand der Autopilotfunktion intuitiv und auf einfache Art und Weise vermittelt werden. Durch die Verwendung des Milchglaseffektes kann beispielsweise zusätzlich angezeigt werden, dass die Autopilotfunktion prinzipiell verfügbar wäre, jedoch aktuell nicht vom Fahrer aktiviert ist. Informationen der Autopilotfunktion werden daher durch den Milchglaseffekt zumindest zu einem bestimmten Teil unkenntlich gemacht und erst dann gut sichtbar, wenn die Autopilotfunktion und somit die Anzeigevorrichtung aktiviert wird.

Gemäß einer Ausführungsform wird beim Bestimmen des Aktivierungszustands der Autopilotfunktion bestimmt, ob die Autopilotfunktion aktiviert ist oder deaktiviert ist. Bei aktivierter Autopilotfunktion wird das Fahrzeug automatisch von dem Fahrerassistenzsystem gesteuert. Die Anzeigevorrichtung des Fahrerassistenzsystems wird aktiviert, wenn die Autopilotfunktion aktiviert ist. Umgekehrt wird die Anzeigevorrichtung deaktiviert, wenn die Autopilotfunktion deaktiviert ist. Durch das Aktivieren der Anzeigevorrichtung der Autopilotfunktion wird der Status der Autopilotfunktion auf einfache Art und Weise eindeutig vermittelt. Bei deaktivierter Anzeigevorrichtung wird die Informationsquantität im Fahrzeug verringert, sodass der Fahrer, welcher nun die Fahrverantwortung besitzt, nicht unnötig abgelenkt wird. Insgesamt kann die Wahrscheinlichkeit einer Fahrbetriebsartverwechslung, d.h., beispielsweise ein versehentliches Annehmen, dass die Autopilotfunktion aktiv ist, dadurch wirkungsvoll verhindert werden, dass die Anzeigevorrichtung nur aktiviert ist, wenn die Autopilotfunktion aktiviert ist und umgekehrt die Anzeigevorrichtung deaktiviert ist, wenn die Autopilotfunktion deaktiviert ist. Darüber hinaus kann eine klare Trennung zwischen Autopilotfunktionen und anderen Informationen, beispielsweise Informationen eines Infotainmentsystems des Fahrzeugs, erreicht werden.

Gemäß einer Ausführungsform erfolgt das Aktivieren der Anzeigevorrichtung, indem die Anzeigevorrichtung eingeschaltet wird. Umgekehrt kann die Anzeigevorrichtung ausgeschaltet werden, wenn die Autopilotfunktion deaktiviert ist. Durch Ausschalten der Anzeigevorrichtung kann intuitiv und klar vermittelt werden, dass die Autopilotfunktion ebenfalls ausgeschaltet ist. Darüber hinaus besteht bei ausgeschalteter Autopilotfunktion keine Ablenkung durch Informationen auf der Anzeigevorrichtung. Alternativ oder zusätzlich kann das Aktivieren der Anzeigevorrichtung ein Einschalten einer Beleuchtung der Anzeigevorrichtung umfassen. Die Beleuchtung kann beispielsweise eine Hintergrundbeleuchtung oder eine Beleuchtung von vorne umfassen. Durch Ausschalten der Beleuchtung kann eine Informationsausgabe auf der Anzeigevorrichtung im Wesentlichen unterbunden werden, sodass wiederum der Aktivierungszustand der Autopilotfunktion klar und einfach über die Anzeigevorrichtung erfassbar ist.

Gemäß einer Ausführungsform werden Informationen der Autopilotfunktion auf der Anzeigevorrichtung ausgegeben. Die Informationen der Autopilotfunktion können beispielsweise eine verbleibende Dauer einer mittels der Autopilotfunktion automatisch gesteuerten Fahrt umfassen. Alternativ oder zusätzlich kann ein zukünftiges Fahrmanöver, welches von der Autopilotfunktion für die automatisch gesteuerte Fahrt bestimmt wurde, auf der Anzeigevorrichtung ausgegeben werden. Weiterhin kann alternativ oder zusätzlich eine Umgebungsinformation, welche von der Autopilotfunktion als eine für die automatisch gesteuerte Fahrt relevante Information erfasst wurde, auf der Anzeigevorrichtung ausgegeben werden. Bei aktivierter Anzeigevorrichtung erhalten der Fahrer und die Insassen des Fahrzeugs somit vielfältige Informationen von der Autopilotfunktion, welche das Vertrauen in die Autopilotfunktion und somit die Akzeptanz dieser neuartigen Funktion erhöhen können.

Die Anzeigevorrichtung kann beispielsweise eine Anzeigefläche aufweisen, welche in einem Armaturenbrett des Fahrzeugs mittig in der Fahrzeugquerrichtung angeordnet ist. Durch die Anordnung der Anzeigefläche in Fahrzeugquerrichtung kann die Anzeigevorrichtung sowohl vom Fahrer als auch von weiteren Insassen des Fahrzeugs gut eingesehen werden. Alternativ oder zusätzlich kann die Anzeigefläche der Anzeigevorrichtung angrenzend unterhalb oder oberhalb einer Anzeigefläche eines Multimediasystems, eines Konfigurationssystems oder eines Navigationssystems des Fahrzeugs angeordnet sein. Wenn sich der Fahrer beispielsweise während einer durch die Autopilotfunktion automatisch gesteuerten Fahrt mit dem Multimediasystem oder dem Navigationssystem des Fahrzeugs beschäftigt, kann er bei einer angrenzenden Anordnung der Anzeige des Autopilotsystems die Arbeitsweise der Autopilotfunktion leicht mitverfolgen und auf Anforderungen der Autopilotfunktion ggf. schnell reagieren. Alternativ oder zusätzlich kann die Anzeigevorrichtung zur Ausgabe der Autopilotinformationen einen separaten Anteil einer Anzeigevorrichtung in einem Kombiinstrument des Fahrzeugs umfassen. Diese Variante ist insbesondere als ein Einführungsszenario denkbar, sodass anfänglich in Fahrzeugen mit einer üblichen oder klassischen Anzeigekonfiguration die Unterscheidung der beiden Fahrbetriebsarten (manueller Betrieb oder Autopilotbetrieb) durch eine sehr klare graphische Abhebung im Kombiinstrument durchgeführt wird. Durch den separaten Anteil der Anzeigefläche in dem Kombiinstrument für die Ausgabe der Autopilotfunktioninformationen kann eine Fehlinterpretation im Wesentlichen verhindert werden. Darüber hinaus kann ein reservierter Bereich in einer Anzeige von beispielsweise einem Multimediasystem, einem Konfigurationssystem, einem Navigationssystem oder einem sonstigen System für eine Mensch-Maschine-Kommunikation vorgesehen werden, auf welchem während der von der Autopilotfunktion gesteuerten Fahrt die Informationen der Autopilotfunktion dargestellt werden.

Gemäß einer Ausführungsform umfasst das Fahrerassistenzsystem eine weitere Anzeigevorrichtung. Diese weitere Anzeigevorrichtung kann beispielsweise einen Teil eines Kombiinstruments, insbesondere eines so genannten frei programmierbaren Kombiinstruments, auf welchem beliebige graphische und textuelle Informationen wiedergegeben werden können, oder ein so genanntes Headup-Display, welches Informationen graphisch oder textuell auf einer Windschutzscheibe des Fahrzeugs einblendet, umfassen. Wenn die Autopilotfunktion deaktiviert ist, werden Informationen des Fahrerassistenzsystems auf dieser weiteren Anzeigevorrichtung ausgegeben. Informationen des Fahrerassistenzsystems bei deaktivierter Autopilotfunktion können beispielsweise eine Anzeige umfassen, dass die Autopilotfunktion für einen kommenden Streckenabschnitt verfügbar ist oder weitere Fahrerassistenzinformationen, wie z.B. eine Spurbelegung rund um das Fahrzeug oder ein Abstand zu einem vorausfahrenden Fahrzeug.

Gemäß einer weiteren Ausführungsform kann die weitere Anzeigevorrichtung zwischen einer ersten Position und einer zweiten Position mechanisch verstellbar sein. In der ersten Position kann die Anzeigevorrichtung von beispielsweise einem auf einem Fahrersitz des Fahrzeugs sitzenden Fahrer ablesbar sein, wohingegen die Anzeigevorrichtung in der zweiten Position nicht von einem auf einem Fahrzeugsitz sitzenden Fahrer oder Insassen ablesbar ist. Wenn die Autopilotfunktion aktiviert ist, wird die weitere Anzeigevorrichtung von der ersten Position in die zweite Position verstellt. Umgekehrt kann die weitere Anzeigevorrichtung bei deaktivierter Autopilotfunktion wieder in die erste Position verstellt werden. Wenn die weitere Anzeigevorrichtung beispielsweise eine Anzeige in einem Kombiinstrument vor einem Fahrersitz des Fahrzeugs umfasst, kann durch das Verstellen der weiteren Anzeigevorrichtung in die zweite Position, in welcher sie von dem Fahrer nicht mehr ablesbar ist, vermittelt werden, dass der Fahrer nun von der Fahraufgabe entbunden ist und die Autopilotfunktion die Führung des Fahrzeugs übernommen hat. Insbesondere in Verbindung mit der automatischen mechanischen Verstellung der Anzeigevorrichtung zur Anzeige der Autopilotfunktioninformationen kann die Anzeige der aktuellen Betriebsart besonders anschaulich vermittelt werden. Wenn die Autopilotfunktion die Fahrzeugführung übernimmt, wird die weitere Anzeigevorrichtung beispielsweise weggeklappt und die Anzeigevorrichtung zur Darstellung der Autopilotfunktionen fährt heraus oder wird in den Sichtbereich der Insassen verstellt. Umgekehrt verschwindet die Anzeigevorrichtung zur Ausgabe der Autopilotfunktioninformationen beim Deaktivieren der Autopilotfunktion und die weitere Anzeigevorrichtung wird wieder hervorgeklappt.

Gemäß einer weiteren Ausführungsform umfasst die Anzeigevorrichtung Eingabemittel, welche von einem Insassen des Fahrzeugs betätigbar sind. Die Eingabemittel können beispielsweise Bedientasten an der Anzeigevorrichtung oder insbesondere eine berührungssensitive Oberfläche, einen so genannten Touchscreen, umfassen. Mittels des Eingabemittels wird eine Konfiguration der Autopilotfunktion erfasst und die Autopilotfunktion kann entsprechend eingestellt werden. Beispielsweise kann eine Routenauswahl oder eine Autopilot-Fahrmodusauswahl konfiguriert werden. Bei der Routenauswahl wird auf der Anzeigevorrichtung für jede auswählbare Route ein entsprechender Autopilotstreckenanteil angezeigt. Der Autopilotstreckenanteil gibt den Anteil der Strecke beispielsweise in Prozent oder Kilometern an, entlang welchem die Autopilotfunktion in der Lage ist, das Fahrzeug automatisch zu steuern. Durch Auswählen einer Route der Routenauswahl kann der Fahrer so beispielsweise eine Route auswählen, bei weleher beispielsweise ein möglichst langer zusammenhängender Autopilotstreckenanteil vorhanden ist oder alternativ eine Route, welche zwar weniger Autopilotstreckenanteile bietet, jedoch insgesamt kürzer zum Ziel ist. Mit der Autopilot-Fahrmodusauswahl kann beispielsweise ein Optimierungskriterium für die Autopilotfunktion ausgewählt werden. Beispielsweise kann der Fahrer auswählen, ob das Fahrzeug während einer automatischen Fahrt mittels der Autopilotfunktion möglichst schnell fahren soll oder möglichst ökonomisch, d.h., mit einem möglichst geringen Verbrauch.

Gemäß der vorliegenden Erfindung wird weiterhin ein Fahrerassistenzsystem für ein Fahrzeug bereitgestellt. Das Fahrerassistenzsystem ist in der Lage, das Fahrzeug mittels einer Autopilotfunktion zumindest teilweise automatisch zu steuern. Das Fahrerassistenzsystem umfasst eine Anzeigevorrichtung und eine Verarbeitungsvorrichtung. Die Verarbeitungsvorrichtung ist in der Lage, einen Aktivierungszustand der Autopilotfunktion zu bestimmen und die Anzeigevorrichtung in Abhängigkeit von dem Aktivierungszustand der Autopilotfunktion zu aktivieren. Das Fahrerassistenzsystem ist somit zur Durchführung des zuvor beschriebenen Verfahrens geeignet und umfasst daher auch die zuvor beschriebenen Vorteile.

Das Fahrerassistenzsystem umfasst eine Anzeigevorrichtung mit einem mechanischen Antrieb. Mithilfe des mechanischen Antriebs kann die Anzeigevorrichtung von einer ersten Position in eine zweite Position verstellt werden. In der zweiten Position ist die Anzeigevorrichtung in dem Fahrzeug derart angeordnet, dass sie von mindestens einer Sitzposition in dem Fahrzeug ablesbar ist. Die mindestens eine Sitzposition umfasst beispielsweise zumindest den Fahrersitz, kann jedoch auch weitere Sitze, beispielsweise den Beifahrersitz oder einen Sitz auf einer Rücksitzbank, umfassen. Wenn die Autopilotfunktion aktiviert wird, wird die Anzeigevorrichtung aktiviert, indem die Verarbeitungsvorrichtung den mechanischen Antrieb derart ansteuert, dass er die Anzeigevorrichtung in die zweite Position verstellt. Alternativ oder zusätzlich weist die Anzeigevorrichtung ein Sicht behinderndes Mittel auf, welches auf einer Anzeigefläche der Anzeigevorrichtung angeordnet ist. Mittels einer Steuerung, welche von der Verarbeitungsvorrichtung angesteuert wird, kann das Sicht behindernde Mittel beseitigt werden. Zum Aktivieren der Anzeigevorrichtung steuert die Steuervorrichtung das Sicht behindernde Mittel derart an, dass das Sicht behindernde Mittel beseitigt wird, d.h., dass die Sicht auf die Anzeigefläche der Anzeigevorrichtung freigegeben wird.

Alternativ oder zusätzlich kann die Anzeigevorrichtung aktiviert werden, indem die Anzeigevorrichtung von der Verarbeitungsvorrichtung eingeschaltet wird. Weiterhin kann alternativ oder zusätzlich die Anzeigevorrichtung aktiviert werden, indem die Verarbeitungsvorrichtung eine Beleuchtung der Anzeigevorrichtung einschaltet.

Gemäß einer Ausführungsform ist das Fahrerassistenzsystem derart ausgestaltet, dass es eine weitere Anzeigevorrichtung aufweist. Die weitere Anzeigevorrichtung kann beispielsweise ein Kombiinstrument oder ein Headup-Display vor einem Fahrersitz des Fahrzeugs umfassen. Die Steuervorrichtung ist in der Lage, Informationen des Fahrerassistenzsystems auf der weiteren Anzeigevorrichtung auszugeben, wenn die Autopilotfunktion deaktiviert ist. Somit werden Informationen des Fahrerassistenzsystems bei aktivierter Autopilotfunktion auf einer gesonderten Anzeigevorrichtung angezeigt und Informationen des Fahrerassistenzsystems bei deaktivierter Autopilotfunktion in beispielsweise dem Kombiinstrument angezeigt. Dadurch ist für den Fahrer und die Insassen des Fahrzeugs einfach und klar erkennbar, ob die aktuelle Steuerung des Fahrzeugs durch den Fahrer oder die Autopilotfunktion erfolgt.

Gemäß der vorliegenden Erfindung wird weiterhin ein Fahrzeug bereitgestellt, welches das zuvor beschriebene Fahrerassistenzsystem umfasst und daher auch die zuvor beschriebenen Vorteile aufweist. Das Fahrzeug ist insbesondere in der Lage, zumindest teilweise automatisch gesteuert zu werden.

Die vorliegende Erfindung wird nachfolgend unter Bezugnahme auf die beigefügte Zeichnung im Detail beschrieben werden.
Fig. 1 zeigt schematisch ein Fahrzeug gemäß einer Ausführungsform der vorliegenden Erfindung.
Fig. 2 zeigt schematisch eine Innenraumansicht des Fahrzeugs der Fig. 1.
Fig. 3 zeigt Verfahrensschritte eines Verfahrens gemäß einer Ausführungsform der vorliegenden Erfindung.

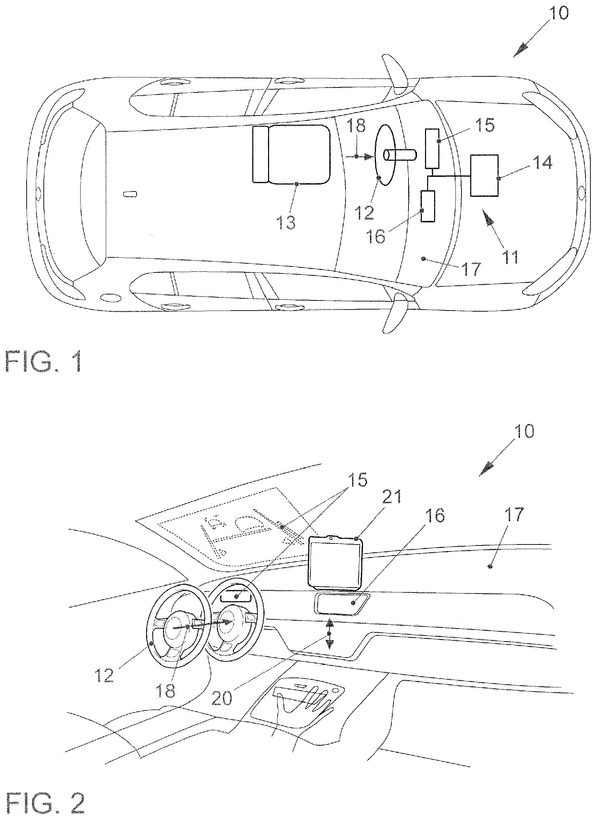

Fig. 1 zeigt ein Fahrzeug 10 mit einem Fahrerassistenzsystem 11. Das Fahrzeug 10 umfasst ferner ein Lenkrad 12 und einen Fahrersitz 13. Das Fahrerassistenzsystem 11 umfasst eine Steuervorrichtung 14, eine erste Anzeigevorrichtung 15, welche in den Ansprüchen als "weitere Anzeigevorrichtung" bezeichnet wird, und eine zweite Anzeigevorrichtung 16, welche in den Ansprüchen als "Anzeigevorrichtung" bezeichnet wird. Die Verarbeitungsvorrichtung 14 ist mit der ersten und zweiten Anzeigevorrichtung 15, 16 gekoppelt. Die erste Anzeigevorrichtung 15 ist beispielsweise in einem Kombiinstrument des Fahrzeugs 10 angeordnet, welches aus Sicht eines auf dem Fahrersitz 13 sitzenden Fahrers hinter dem Lenkrad 12 angeordnet ist. Die zweite Anzeigevorrichtung 16 ist beispielsweise näherungsweise mittig in Fahrzeugquerrichtung in einem Armaturenbrett 17 des Fahrzeugs 10 angeordnet.

Das Fahrerassistenzsystem 11 ist in der Lage, das Fahrzeug 10 zumindest teilweise automatisch zu steuern. Dazu kann das Fahrerassistenzsystem 14 sowohl eine Querführung als auch eine Längsführung des Fahrzeugs 10 entlang zumindest einiger Streckenabschnitte einer Fahrtroute automatisch steuern. Somit ist das Fahrerassistenzsystem 11 in der Lage, das Fahrzeug 10 ohne Aktivität des Fahrers zumindest in bestimmten Situationen zu steuern. Eine derartige Funktionalität des Fahrerassistenzsystems 11 zum automatischen Steuern des Fahrzeugs 10 wird nachfolgend als Autopilotfunktion bezeichnet werden. Das Fahrerassistenzsystem kann beispielsweise kontinuierlich bestimmen, ob eine automatische Fahrt mittels der Autopilotfunktion möglich ist und dies dem Fahrer anzeigen. Der Fahrer kann die Autopilotfunktion dann beispielsweise durch Betätigen von entsprechenden Bedienelementen an dem Lenkrad 12 aktivieren. Ferner kann die Autopilotfunktion aktiviert werden, indem beispielsweise das Lenkrad 12 manuell von dem Fahrer weg in Richtung Armaturenbrett 17 geschoben wird. Diese Bewegung des Lenkrads 12 wird in Fig. 1 durch den Pfeil 18 verdeutlicht.

Wenn der Fahrer bei aktivierter Autopilotfunktion die Autopilotfunktion deaktivieren möchte, kann er dies beispielsweise durch Betätigen entsprechender Bedienelemente an dem Lenkrad 12 bewirken oder indem er das Lenkrad 12 manuell wieder von dem Armaturenbrett 17 zu sich heranzieht, also entgegen der Richtung des Pfeils 18.

Fig. 2 zeigt schematisch eine Perspektivansicht eines Innenraums des Fahrzeugs 10. Die Autopilotfunktion kann, wie zuvor beschrieben, durch Bewegen des Lenkrads 12 in Richtung des Pfeils 18 aktiviert werden und durch Bewegen entgegen der Richtung des Pfeils 18 deaktiviert werden. Weiterhin sind in Fig. 2 die erste Anzeigevorrichtung 15 und die zweite Anzeigevorrichtung 16 gezeigt. Die erste Anzeigevorrichtung 15 kann beispielsweise, wie zuvor beschrieben, eine Anzeige in einem so genannten frei programmierbaren Kombidisplay sein. Darüber hinaus kann die erste Anzeigevorrichtung 15 auch eine in eine Windschutzscheibe des Fahrzeugs eingeblendete Anzeige, ein so genanntes Headup-Display, umfassen. Weiterhin ist eine Anzeige 21 eines Multimedia- oder Navigationssystems gezeigt.

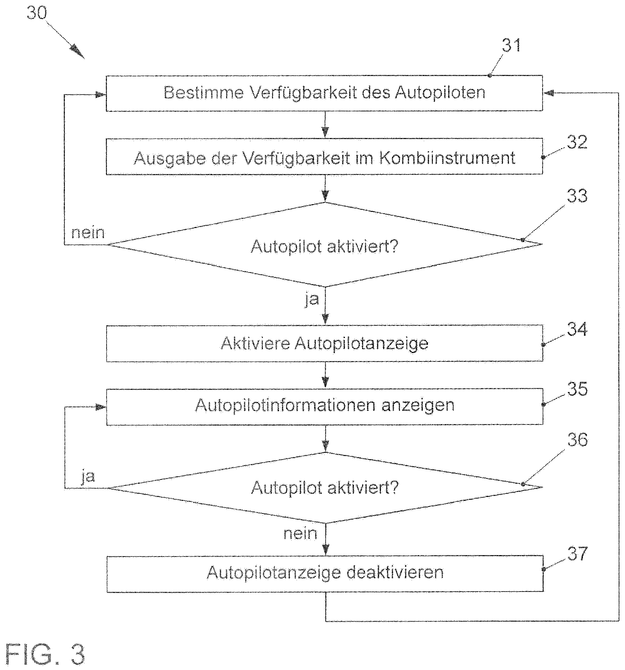

Die Arbeitsweise des Fahrerassistenzsystems 11 wird nachfolgend in Verbindung mit der Figur 3 im Detail beschrieben werden.

Fig. 3 zeigt Verfahrensschritte 31-37 eines Verfahrens 30, welche von der Verarbeitungsvorrichtung 14 ausgeführt werden. Das Verfahren 30 geht von einem manuellen Fahrbetrieb aus, d.h., das Fahrzeug 10 wird manuell von einem Fahrer, welcher sich in dem Fahrzeug 10 befindet, gesteuert. Ein Navigationssystem des Fahrzeugs 10 hat beispielsweise eine Route zu einem Ziel bestimmt oder eine voraussichtliche Fahrstrecke des Fahrzeugs 10 auf eine beliebige andere Art und Weise bestimmt. Auf der ersten Anzeigevorrichtung 15 in dem Kombiinstrument oder dem Headup-Display werden übliche Informationen für den Fahrer, beispielsweise eine Geschwindigkeit des Fahrzeugs, ein Tankfüllstand, eine aktuelle Motordrehzahl usw. dargestellt. Während dieser manuellen Fahrt wird im Schritt 31 bestimmt, ob die Autopilotfunktion des Fahrerassistenzsystems 11 verfügbar ist, d.h., ob das Fahrerassistenzsystem 11 aktuell in der Lage ist, die Fahrzeugführung zu übernehmen. Die Verfügbarkeit der Autopilotfunktion wird im Kombiinstrument oder auf dem Headup-Display im Schritt 32 angezeigt. Wenn die Autopilotfunktion verfügbar ist, kann der Fahrer, wie zuvor beschrieben, beispielsweise durch Betätigen von entsprechenden Bedienelementen an dem Lenkrad 12 oder durch Verschieben des Lenkrads 12 die Autopilotfunktion aktivieren. Dies wird im Schritt 33 überprüft. Wenn im Schritt 33 festgestellt wird, dass der Fahrer die Autopilotfunktion aktiviert hat, wird im Schritt 34 die zweite Anzeigevorrichtung 16, welche nachfolgend als Autopilotanzeige 16 bezeichnet werden wird, aktiviert. Das Aktivieren der Autopilotanzeige 16 kann beispielsweise erfolgen, indem die Autopilotanzeige 16 aus einer entsprechenden Aussparung in dem Armaturenbrett 17 in den Sichtbereich des Fahrers herausgefahren wird, wie es beispielsweise durch den Pfeil 20 in Fig. 2 dargestellt ist. Die Autopilotanzeige 16 kann auch beispielsweise durch eine Drehbewegung in den Sichtbereich des Fahrers oder anderer Insassen des Fahrzeugs gebracht werden. Weitere Alternativen bestehen darin, dass die Anzeigevorrichtung 16 im Schritt 34 eingeschaltet wird oder beleuchtet wird, indem beispielsweise eine Hintergrundbeleuchtung oder eine sonstige Beleuchtung an der Autopilotanzeige 16 aktiviert wird. Mit dem Aktivieren der Autopilotanzeige 16 kann gleichzeitig beispielsweise das Headup-Display zumindest teilweise abgeschaltet werden oder das Kombiinstrument zumindest teilweise abgeschaltet oder sogar mechanisch weggeklappt oder weggedreht werden. Ein derartiges Wegklappen kann alternativ auch softwareseitig realisiert werden. Weiterhin kann die Autopilotanzeige 16 auf einer Anzeigeoberfläche ein so genanntes "Switchable Glass" aufweisen, welches durch eine entsprechende Ansteuerung wahlweise im Wesentlichen transparent ist oder einen Milchglaseffekt aufweist. Im Schritt 34 wird dann zum Aktivieren der Autopilotanzeige 16 von dem Milchglaseffekt zu der transparenten Anzeige umgeschaltet. Auch diese Effekte können alternativ softwareseitig realisiert werden. Nach dem Aktivieren der Autopilotanzeige 16 werden im Schritt 35 Informationen der Autopilotfunktion auf der Autopilotanzeige 16 angezeigt. Diese Informationen können beispielsweise eine verbleibende Dauer im pilotierten Modus oder zukünftige Fahrmanöver umfassen. Im Schritt 36 wird überprüft, ob die Autopilotfunktion von dem Fahrer deaktiviert wurde. Wenn die Autopilotfunktion weiterhin aktiv ist, werden im Schritt 35 weitere Autopilotinformationen angezeigt. Bei deaktivierter Autopilotfunktion wird im Schritt 37 die Autopilotanzeige 16 deaktiviert. Dazu kann die Autopilotanzeige 16 beispielsweise weggeklappt werden oder wieder in dem Armaturenbrett 17 versenkt werden. Alternativ oder zusätzlich kann die Autopilotanzeige 16 zum Deaktivieren ausgeschaltet werden, eine Beleuchtung der Autopilotanzeige 16 abgeschaltet werden oder das zuvor beschriebene "Switchable Glass" wieder in die Milchglasbetriebsart versetzt werden. Schließlich wird die Anzeigevorrichtung 15 wieder aktiviert.

Durch die Verwendung der separaten Autopilotanzeige 16 kann eine klare Trennung zwischen manueller Fahrt und Autopilotfahrt erreicht werden. Durch das Wegklappen oder Versenken der Autopilotanzeige 16 kann die Informationsfülle in dem Fahrzeug bei der manuellen Fahrt verringert werden. Die Nutzung des zuvor beschriebenen Anzeigenwechsels zwischen den Anzeigen 15 und 16 vermittelt eindeutig den aktuellen Status des Fahrzeugs. Durch die Verwendung der zusätzlichen Autopilotanzeige 16 können alle autopilotrelevanten Informationen an einem Ort angezeigt werden. Die zentrale Position der Autopilotanzeige 16 ermöglicht eine Einsehbarkeit durch den Fahrer und weitere Insassen des Fahrzeugs. Während das Fahrzeug von der Autopilotfunktion gesteuert wird, kann sich der Fahrer beispielsweise anderen Aufgaben widmen. Dazu kann er beispielsweise die Anzeige 21 einer so genannten Head-Unit in einer Mittelkonsole des Fahrzeugs verwenden, um beispielsweise einen Film zu schauen. Dabei ist die Autopilotanzeige 16 dennoch stets peripher gut einsehbar, sodass der Fahrer im Falle einer Anforderung, dass er die Fahrzeugführung wieder übernehmen muss, stets gut informiert ist. Schließlich kann durch die Verwendung der separaten Autopilotanzeige 16 die Wahrscheinlichkeit einer Verwechslung, Verwirrung oder Konfusion bezüglich der aktuellen Betriebsart des Fahrzeugs verringert werden.

Die Autopilotanzeige 16 kann einen so genannten Touchscreen oder eine alternative Eingabemodalität umfassen, welche zur Konfiguration der Autopilotfunktionalität verwendet werden kann. Beispielsweise kann eine Routenauswahl (Anteil pilotierter Teilstrecken) oder ein Fahrmodus (ökologisch oder schnell) der Autopilotfunktion ausgewählt werden. Alternativ zu einer getrennten Autopilotanzeige 16, wie sie in den Figuren 1 und 2 gezeigt ist, kann die Autopilotanzeige auch eine Erweiterung der Anzeigevorrichtung 21 für die Head-Unit oder eine sonstige Mensch-Maschine-Schnittstelle in der Mittelkonsole des Fahrzeugs 10 sein, sodass die Autopilotanzeige 16 keine getrennte Anzeigevorrichtung umfasst, sondern aus der Anzeigevorrichtung der Head Unit erwächst oder darauf einen reservierten Teil einnimmt.

### Bezugszeichenliste

- 10: Fahrzeug
- 11: Fahrerassistenzsystem
- 12: Lenkrad
- 13: Fahrersitz
- 14: Steuervorrichtung
- 15: erste Anzeigevorrichtung
- 16: zweite Anzeigevorrichtung
- 17: Armaturenbrett
- 18: Pfeil
- 20: Pfeil
- 21: Anzeigevorrichtung
- 30: Verfahren
- 31-37: Schritt

## Patentansprüche

1. Verfahren für ein Fahrerassistenzsystem eines Fahrzeugs, wobei das Fahrerassistenzsystem (11) in der Lage ist, das Fahrzeug (10) mittels einer Autopilotfunktion zumindest teilweise automatisch zu steuern, wobei das Verfahren umfasst:
- Bestimmen eines Aktivierungszustands der Autopilotfunktion, und
- Aktivieren einer Anzeigevorrichtung (16) des Fahrerassistenzsystems (11) in Abhängigkeit von dem Aktivierungszustand der Autopilotfunktion,
**dadurch gekennzeichnet, dass** das Aktivieren der Anzeigevorrichtung (16) umfasst:
- mechanisches Verstellen der Anzeigevorrichtung (16) von einer ersten Position in eine zweite Position, wobei die Anzeigevorrichtung (16) in der zweiten Position derart in dem Fahrzeug (10) angeordnet ist, dass sie von mindestens einer Sitzposition (13) in dem Fahrzeug (10) ablesbar ist, und/oder
- Beseitigen eines Sicht behindernden Mittels, welches auf einer Anzeigefläche der Anzeigevorrichtung (16) angeordnet ist.

2. Verfahren nach Anspruch 1, wobei das Bestimmen des Aktivierungszustands der Autopilotfunktion ein Bestimmen umfasst, ob die Autopilotfunktion des Fahrerassistenzsystems (11) aktiviert ist oder deaktiviert ist, wobei das Fahrzeug (10) bei aktivierter Autopilotfunktion von dem Fahrerassistenzsystem (11) automatisch gesteuert wird,
**dadurch gekennzeichnet, dass** die Anzeigevorrichtung (16) des Fahrerassistenzsystems (11) aktiviert wird, wenn die Autopilotfunktion aktiviert ist, und wobei die Anzeigevorrichtung (16) deaktiviert wird, wenn die Autopilotfunktion deaktiviert ist.

3. Verfahren nach Anspruch 1 oder 2, **dadurch gekennzeichnet, dass** das Aktivieren der Anzeigevorrichtung (16) umfasst:
- Einschalten der Anzeigevorrichtung (16), und/oder
- Einschalten einer Beleuchtung der Anzeigevorrichtung (16).

4. Verfahren nach einem der vorhergehenden Ansprüche, **dadurch gekennzeichnet, dass** das Verfahren ferner umfasst:
- Ausgeben von Informationen der Autopilotfunktion auf der Anzeigevorrichtung (16).

5. Verfahren nach einem der vorhergehenden Ansprüche, **dadurch gekennzeichnet, dass** das Ausgeben von Informationen der Autopilotfunktion auf der Anzeigevorrichtung (16) umfasst:
- Ausgeben einer verbleibenden Dauer einer mittels der Autopilotfunktion automatisch gesteuerten Fahrt auf der Anzeigevorrichtung (16), und/oder
- Ausgeben eines zukünftigen Fahrmanövers, welches von der Autopilotfunktion für die automatisch gesteuerte Fahrt bestimmt wurde, und/oder
- Ausgeben einer Umgebungsinformation, welche von der Autopilotfunktion als eine für die automatisch gesteuerte Fahrt relevante Information erfasst wurde.

6. Verfahren nach einem der vorhergehenden Ansprüche, **dadurch gekennzeichnet, dass** die Anzeigevorrichtung (16) umfasst:
- eine Anzeigefläche, welche in einem Armaturenbrett (17) des Fahrzeugs (10) mittig in Fahrzeugquerrichtung angeordnet ist, und/oder
- eine Anzeigefläche (16), welche angrenzend unterhalb einer Anzeigefläche (21) eines Multimedia-, Konfigurations- oder Navigationssystem des Fahrzeugs (10) angeordnet ist, und/oder
- eine Anzeigefläche, welche angrenzend oberhalb einer Anzeigefläche eines Multimedia-, Konfigurations- oder Navigationssystem des Fahrzeugs angeordnet ist, und/oder
- einen separaten Anteil einer Anzeigefläche in einem Kombiinstrument des Fahrzeugs (10).

7. Verfahren nach einem der vorhergehenden Ansprüche, **dadurch gekennzeichnet, dass** das Fahrerassistenzsystem (11) eine weitere Anzeigevorrichtung (15) aufweist, wobei das Verfahren ferner umfasst:
- Ausgeben von Informationen des Fahrerassistenzsystems (11) auf der weiteren Anzeigevorrichtung (15), wenn die Autopilotfunktion deaktiviert ist.

8. Verfahren nach Anspruch 7, **dadurch gekennzeichnet, dass** das Verfahren ferner umfasst:
- mechanisches Verstellen der weiteren Anzeigevorrichtung (15) von einer ersten Position in eine zweite Position, wenn die Autopilotfunktion aktiviert ist, wobei die weitere Anzeigevorrichtung (15) in der zweiten Position derart in dem Fahrzeug (10) angeordnet ist, dass sie von Sitzpositionen (13) in dem Fahrzeug (10) nicht ablesbar ist.

9. Verfahren nach einem der vorhergehenden Ansprüche, wobei die Anzeigevorrichtung (16) Eingabemittel umfasst, welche von einem Insassen des Fahrzeugs (10) betätigbar sind, **dadurch gekennzeichnet, dass** das Verfahren ferner umfasst:
- Erfassen einer Konfigurationsinformation mittels des Eingabemittels für eine Konfiguration der Autopilotfunktion.

10. Verfahren nach Anspruch 9, **dadurch gekennzeichnet, dass** die Konfigurationsinformation umfasst:
- eine Routenauswahl, wobei auf der Anzeigevorrichtung (16) für jede auswählbare Route der Routenauswahl ein Autopilotstreckenanteil angezeigt wird, wobei das Fahrerassistenzsystem (11) in der Lage ist, das Fahrzeug in dem Autopilotstreckenanteil automatisch zu steuern, und/oder
- eine Autopilotfahrmodusauswahl, mit welcher ein Optimierungskriterium für die Autopilotfunktion einstellbar ist.

11. Fahrerassistenzsystem für ein Fahrzeug, wobei das Fahrerassistenzsystem (11) in der Lage ist, das Fahrzeug (10) mittels einer Autopilotfunktion zumindest teilweise automatisch zu steuern, wobei das Fahrerassistenzsystem (11) umfasst:
- eine Anzeigevorrichtung (16), und
- eine Verarbeitungsvorrichtung (14), welche ausgestaltet ist,
einen Aktivierungszustand der Autopilotfunktion zu bestimmen, und
die Anzeigevorrichtung (16) in Abhängigkeit von dem Aktivierungszustand der Autopilotfunktion zu aktivieren,
**dadurch gekennzeichnet,**
- **dass** die Anzeigevorrichtung (16) mit einem mechanischen Antrieb von einer ersten Position in eine zweite Position verstellbar ist, wobei die Anzeigevorrichtung (16) in der zweiten Position derart in dem Fahrzeug (10) angeordnet ist, dass sie von mindestens einer Sitzposition (13) in dem Fahrzeug (10) ablesbar ist, wobei die Verarbeitungsvorrichtung (14) ausgestaltet ist, zum Aktivieren der Anzeigevorrichtung (16) den mechanischen Antrieb derart anzusteuern, dass er die Anzeigevorrichtung (16) in die zweite Position verstellt, und/oder
- **dass** die Anzeigevorrichtung (16) ein auf einer Anzeigefläche der Anzeigevorrichtung (16) angeordnetes Sicht behinderndes Mittel aufweist, welches mittels einer Steuerung beseitigbar ist, wobei die Verarbeitungsvorrichtung (14) ausgestaltet ist, zum Aktivieren der Anzeigevorrichtung (16) die Steuerung zum Beseitigen des Sicht behindernden Mittels anzusteuern.

12. Fahrerassistenzsystem nach Anspruch 11, **dadurch gekennzeichnet,**
- **dass** die Verarbeitungsvorrichtung (14) ausgestaltet ist, zum Aktivieren der Anzeigevorrichtung (16) die Anzeigevorrichtung (16) einzuschalten, und/oder
- **dass** die Verarbeitungsvorrichtung (14) ausgestaltet ist, zum Aktivieren der Anzeigevorrichtung (16) eine Beleuchtung der Anzeigevorrichtung (16) einzuschalten.

13. Fahrerassistenzsystem nach Anspruch 11 oder 12, **dadurch gekennzeichnet, dass** das Fahrerassistenzsystem (11) eine weitere Anzeigevorrichtung (15) aufweist, wobei die Steuervorrichtung (14) ausgestaltet ist, Informationen des Fahrerassistenzsystems (11) auf der weiteren Anzeigevorrichtung (15) auszugeben, wenn die Autopilotfunktion deaktiviert ist.

14. Fahrerassistenzsystem nach einem der Ansprüche 11 bis 13, **dadurch gekennzeichnet, dass** das Fahrerassistenzsystem (11) zur Durchführung des Verfahrens nach einem der Ansprüche 1 bis 10 ausgestaltet ist.

## Claims

1. Method for a driver assistance system of a vehicle, wherein the driver assistance system (11) is able to control the vehicle (10) in an at least partially automatic fashion by means of an autopilot function, wherein the method comprises:
- determining an activation state of the autopilot function, and
- activating a display device (16) of the driver assistance system (11) as a function of the activation state of the autopilot function,
**characterized in that** the activation of the display device (16) comprises:
- mechanically adjusting the display device (16) from a first position into a second position, wherein in the second position the display device (16) is arranged in the vehicle (10) in such a way that said display device can be read from at least one sitting position (13) in the vehicle (10), and/or
- eliminating a view-obstructing means which is arranged on a display area of the display device (16).

2. Method according to Claim 1, wherein the determination of the activation state of the autopilot function comprises determining whether the autopilot function of the driver assistance system (11) is activated or deactivated, wherein when the autopilot function is activated the vehicle (10) is controlled automatically by the driver assistance system (11), **characterized in that** the display device (16) of the driver assistance system (11) is activated if the autopilot function is activated, and wherein the display device (16) is deactivated if the autopilot function is deactivated.

3. Method according to Claim 1 or 2, **characterized in that** the activation of the display device (16) comprises:
- switching on the display device (16) and/or
- switching on a lighting system of the display device (16).

4. Method according to one of the preceding claims, **characterized in that** the method also comprises:
- outputting information of the autopilot function on the display device (16).

5. Method according to one of the preceding claims, **characterized in that** the outputting of information of the autopilot function on the display device (16) comprises:
- outputting on the display device (16) a remaining duration of a journey which is controlled automatically by means of the autopilot function, and/or
- outputting a future driving manoeuvre which has been determined for the automatically controlled journey by the autopilot function, and/or
- outputting surroundings information which has been acquired by the autopilot function as information which is relevant to the automatically controlled journey.

6. Method according to one of the preceding claims, **characterized in that** the display device (16) comprises:
- a display area which is arranged in a dashboard (17) of the vehicle (10), centrally in the transverse direction of the vehicle, and/or
- a display area (16) which is arranged adjacently underneath a display area (21) of a multimedia, configuration or navigation system of the vehicle (10), and/or
- a display area which is arranged adjacently above a display area of a multimedia, configuration or navigation system of the vehicle, and/or
- a separate portion of a display area in a combination instrument of the vehicle (10).

7. Method according to one of the preceding claims, **characterized in that** the driver assistance system (11) has a further display device (15), wherein the method also comprises:
- outputting information of the driver assistance system (11) on the further display device (15) if the autopilot function is deactivated.

8. Method according to Claim 7, **characterized in that** the method also comprises:
- mechanically adjusting the further display device (15) from a first position into a second position if the autopilot function is activated, wherein in the second position the further display device (15) is arranged in the vehicle (10) in such a way that it cannot be read from sitting positions (13) in the vehicle (10).

9. Method according to one of the preceding claims, wherein the display device (16) comprises input means which can be activated by an occupant of the vehicle (10), **characterized in that** the method also comprises:
- acquiring, by means of the input means, configuration information for configuration of the autopilot function.

10. Method according to Claim 9, **characterized in that** the configuration information comprises:
- a route selection, wherein an autopilot route component is displayed for each selectable route of the route selection on the display device (16), wherein the driver assistance system (11) is able to control the vehicle automatically in the autopilot route portion, and/or
- an autopilot travel mode selection with which an optimization criterion can be set for the autopilot function.

11. Driver assistance system for a vehicle, wherein the driver assistance system (11) is able to control the vehicle (10) in an at least partially automatic fashion by means of an autopilot function, wherein the driver assistance system (11) comprises:
- a display device (16), and
- a processing device (14) which is configured to determine an activation state of the autopilot function, and
to activate the display device (16) as a function of the activation state of the autopilot function, **characterized**
- **in that** the display device (16) can be adjusted from a first position into a second position with a mechanical drive, wherein in the second position the display device (16) is arranged in the vehicle (10) in such a way that said display device can be read from at least one sitting position (13) in the vehicle (10), wherein, in order to activate the display device (16), the processing device (14) is configured to actuate the mechanical drive in such a way that it adjusts the display device (16) into the second position, and/or
- **in that** the display device (16) has a view-obstructing means which is arranged on a display area of the display device (16) and which can be eliminated by means of a controller, wherein, in order the activate the display device (16), the processing device (14) is configured to actuate the controller to eliminate the view-obstructing means.

12. Driver assistance system according to Claim 11, **characterized**
- **in that**, in order to activate the display device (16), the processing device (14) is configured to switch on the display device (16), and/or
- **in that**, in order to activate the display device (16), the processing device (14) is configured to switch on a lighting system of the display device (16).

13. Driver assistance system according to Claim 11 or 12, **characterized in that** the driver assistance system (11) has a further display device (15), wherein the control device (14) is configured to output information of the driver assistance system (11) on the further display device (15) if the autopilot function is deactivated.

14. Driver assistance system according to one of Claims 11 to 13, **characterized in that** the driver assistance system (11) is configured to carry out the method according to one of Claims 1 to 10.

## Revendications

1. Procédé pour un système d'assistance au conducteur d'un véhicule, le système d'assistance au conducteur (11) étant en mesure de commander au moins partiellement automatiquement le véhicule (10) au moyen d'une fonction de pilote automatique, le procédé comprenant :
- la détermination d'un état d'activation de la fonction de pilote automatique et
- l'activation d'un dispositif d'affichage (16) du système d'assistance au conducteur (11) en fonction de l'état d'activation de la fonction de pilote automatique, **caractérisé en ce que** l'activation du dispositif d'affichage (16) comprend :
- le positionnement mécanique du dispositif d'affichage (16) d'une première position à une deuxième position, le dispositif d'affichage (16) dans la deuxième position étant disposé de telle sorte dans le véhicule (10) qu'il peut être lu depuis au moins une position assise (13) dans le véhicule (10), et/ou
- l'élimination d'un moyen qui entrave la visibilité, lequel est disposé sur une surface d'affichage du dispositif d'affichage (16).

2. Procédé selon la revendication 1, la détermination de l'état d'activation de la fonction de pilote automatique comprenant une détermination si la fonction de pilote automatique du système d'assistance au conducteur (11) est activée ou désactivée, le véhicule (10) étant commandé automatiquement par le système d'assistance au conducteur (11) lorsque la fonction de pilote automatique est activée, **caractérisé en ce que** le dispositif d'affichage (16) du système d'assistance au conducteur (11) est activé lorsque la fonction de pilote automatique est activée et le dispositif d'affichage (16) étant désactivé lorsque la fonction de pilote automatique est désactivée.

3. Procédé selon la revendication 1 ou 2, **caractérisé en ce que** l'activation du dispositif d'affichage (16) comprend :
- l'allumage du dispositif d'affichage (16), et/ou
- l'allumage d'un éclairage du dispositif d'affichage (16).

4. Procédé selon l'une des revendications précédentes, **caractérisé en ce que** le procédé comprend en outre :
- la délivrance d'informations de la fonction de pilote automatique sur le dispositif d'affichage (16).

5. Procédé selon l'une des revendications précédentes, **caractérisé en ce que** la délivrance d'informations de la fonction de pilote automatique sur le dispositif d'affichage (16) comprend :
- la délivrance sur le dispositif d'affichage (16) d'une durée restante d'un déplacement commandé automatiquement au moyen de la fonction de pilote automatique, et/ou
- la délivrance d'une future manœuvre de conduite qui a été déterminée par la fonction de pilote automatique pour le déplacement commandé automatiquement, et/ou
- la délivrance d'une information d'environnement qui a été acquise par la fonction de pilote automatique sous la forme d'une information pertinente pour le déplacement commandé automatiquement.

6. Procédé selon l'une des revendications précédentes, **caractérisé en ce que** le dispositif d'affichage (16) comprend :
- une surface d'affichage qui est disposée au centre dans la direction transversale du véhicule dans un tableau de bord (17) du véhicule (10), et/ou
- une surface d'affichage (16) qui est disposée adjacente au-dessous d'une surface d'affichage (21) d'un système multimédia, de configuration ou de navigation du véhicule (10), et/ou
- une surface d'affichage qui est disposée adjacente au-dessus d'une surface d'affichage d'un système multimédia, de configuration ou de navigation du véhicule, et/ou
- une portion séparée d'une surface d'affichage dans un instrument combiné du véhicule (10).

7. Procédé selon l'une des revendications précédentes, **caractérisé en ce que** le système d'assistance au conducteur (11) possède un dispositif d'affichage supplémentaire (15), le procédé comprenant en outre :
- la délivrance d'informations du système d'assistance au conducteur (11) sur le dispositif d'affichage supplémentaire (15) lorsque la fonction de pilote automatique est désactivée.

8. Procédé selon la revendication 7, **caractérisé en ce que** le procédé comprend en outre :
- le positionnement mécanique du dispositif d'affichage supplémentaire (15) d'une première position à une deuxième position lorsque la fonction de pilote automatique est activée, le dispositif d'affichage supplémentaire (15) dans la deuxième position étant disposé de telle sorte dans le véhicule (10) qu'il ne peut pas être lu depuis les positions assises (13) dans le véhicule (10).

9. Procédé selon l'une des revendications précédentes, le dispositif d'affichage (16) comprenant des moyens de saisie qui peuvent être actionnés par un occupant du véhicule (10), **caractérisé en ce que** le procédé comprend en outre :
- l'acquisition d'une information de configuration à l'aide du moyen de saisie pour une configuration de la fonction de pilote automatique.

10. Procédé selon la revendication 9, **caractérisé en ce que** l'information de configuration comprend :
- une sélection d'itinéraires, une fraction de parcours en pilote automatique étant affichée sur le dispositif d'affichage (16) pour chaque itinéraire pouvant être sélectionné de la sélection d'itinéraires, le système d'assistance au conducteur (11) étant en mesure de commander automatiquement le véhicule dans la fraction de parcours en pilote automatique, et/ou
- une sélection de mode de conduite en pilote automatique qui permet de régler un critère d'optimisation pour la fonction de pilote automatique.

11. Système d'assistance au conducteur pour un véhicule, le système d'assistance au conducteur (11) étant en mesure de commander au moins partiellement automatiquement le véhicule (10) au moyen d'une fonction de pilote automatique, le système d'assistance au conducteur (11) comprenant :
- un dispositif d'affichage (16) et
- un dispositif de traitement (14), lequel est configuré pour
déterminer un état d'activation de la fonction de pilote automatique et
activer le dispositif d'affichage (16) en fonction de l'état d'activation de la fonction de pilote automatique,
**caractérisé en ce**
- **que** le dispositif d'affichage (16) peut être positionné d'une première position à une deuxième position par un mécanisme d'entraînement mécanique, le dispositif d'affichage (16) dans la deuxième position étant disposé de telle sorte dans le véhicule (10) qu'il peut être lu depuis au moins une position assise (13) dans le véhicule (10), le dispositif de traitement (14) étant configuré pour, en vue d'activer le dispositif d'affichage (16), commander le mécanisme d'entraînement mécanique de telle sorte qu'il positionne le dispositif d'affichage (16) dans la deuxième position, et/ou
- **que** le dispositif d'affichage (16) possède un moyen qui entrave la visibilité disposé sur une surface d'affichage du dispositif d'affichage (16), lequel peut être éliminé au moyen d'une commande, le dispositif de traitement (14) étant configuré pour, en vue d'activer le dispositif d'affichage (16), commander la commande pour éliminer le moyen qui entrave la visibilité.

12. Système d'assistance au conducteur selon la revendication 11, **caractérisé en ce**
- **que** le dispositif de traitement (14) est configuré pour allumer le dispositif d'affichage (16) en vue d'activer le dispositif d'affichage (16), et/ou
- **que** le dispositif de traitement (14) est configuré pour allumer un éclairage du dispositif d'affichage (16) en vue d'activer le dispositif d'affichage (16).

13. Système d'assistance au conducteur selon la revendication 11 ou 12, **caractérisé en ce que** le système d'assistance au conducteur (11) possède un dispositif d'affichage supplémentaire (15), le dispositif de commande (14) étant configuré pour délivrer des informations du système d'assistance au conducteur (11) sur le dispositif d'affichage supplémentaire (15) lorsque la fonction de pilote automatique est désactivée.

14. Système d'assistance au conducteur selon l'une des revendications 11 à 13, **caractérisé en ce que** le système d'assistance au conducteur (11) est configuré pour mettre en œuvre le procédé selon l'une des revendications 1 à 10.
